# EUROPEAN PATENT APPLICATION

(11) **EP 0 947 877 A1**
(43) Date of publication of application: **06.10.1999**
(21) Application number: 99302531.1
(22) Date of filing: 31.03.1999
(51) Int. Cl.: G03B 15/06, F21V 7/18

(54) **Collapsible structure**

(30) Priority: 31.03.1998 GB 9806781
(71) Applicant: Lastolite Limited, Coalville, Leicestershire LE67 3FW (GB)
(72) Inventor: Weakley, Alastair James, Leicestershire, LE12 8LS (GB)
(74) Representative: Jones, Stephen Anthony

(57) **Abstract**

A collapsible structure (1) useful as a photographic soft-box has a generally pyramidal expanded configuration and a generally planar collapsed configuration. The structure (1) has a generally planar face, the corners of which are connected by struts (4) to a central boss (2) positioned at the apex of the structure (1) when the structure (1) is in the expanded configuration. The struts (4) are resilient and flexible and of sufficient length to tension the planar face when the structure (1) is in the expanded configuration. The structure (1) can be collapsed by twisting and depressing the boss (2) with respect to the planar face, and expanded simply by grasping the boss (2) and exerting a sharp backwards movement, eg with a simple shaking action.

## Description

This invention relates to a collapsible structure, and in particular to a photographic accessory having such a structure.

In studio photography in particular it is common practice to achieve lighting effects by fitting a so-called soft-box to a studio lamp. The soft-box is typically pyramidal in shape and comprises a fabric enclosure which is tensioned by a rigid frame. The apex of the pyramidal enclosure is mounted on the lamp and light is transmitted through the base of the enclosure, which may take the form of a translucent screen.

A disadvantage of known forms of soft-box is that they are relatively cumbersome and are therefore difficult to store and transport. It may be possible to collapse the soft-box for more convenient storage and transportation, but erection of the soft-box is then time-consuming and laborious.

There is therefore a need for a collapsible soft-box which can be quickly and simply expanded for use, and equally quickly collapsed for storage and transportation.

There has now been devised a collapsible structure suitable for use in a photographic soft-box or other applications which satisfies this requirement.

According to the invention, there is provided a collapsible structure having a generally pyramidal expanded configuration and a generally planar collapsed configuration, the structure having a generally planar face, the corners of which are connected by struts to a central boss positioned at the apex of the structure when the structure is in the expanded configuration, wherein the struts are resilient and flexible and of sufficient length to tension the planar face when the structure is in the expanded configuration and the structure can be collapsed by twisting and depressing the boss with respect to the planar face.

The collapsible structure of the invention is advantageous primarily in that it is very readily moved between the expanded and collapsed positions. In the collapsed configuration, the structure may be easily transported and stored, yet it may be expanded simply by grasping the boss and exerting a sharp backwards movement, eg with a simple shaking action. The resilience of the struts then causes the structure to move automatically to the expanded configuration.

The collapsible structure of the invention may find application in various fields. However, one preferred field of application is in a photographic accessory of the type known as a soft-box. In this case, the planar face of the structure is preferably a light-modifying screen, eg a translucent diffusive and/or coloured screen, and the boss is preferably adapted for mounting on a suitable light source, eg a photographic studio lamp.

The planar face of the structure is most preferably square, in which case there are four struts spaced at 90° intervals.

The sides of the soft-box are preferably closed by an enclosure which is shaped to conform to the shape of the soft-box in the expanded configuration. In such a case each corner of the enclosure is preferably provided with a pocket into which the end of a strut is inserted. To facilitate fitting of the enclosure to the structure, such a pocket is most preferably releasably fastened to the enclosure and is connected thereto by an elastic linkage. This enables the pocket to be released from the enclosure and fitted over the end of the strut and then to be reaffixed to the enclosure with the strut in place. The elastic linkage is most preferably an elasticated fabric tape or the like, and the releasable fastening between the pocket and the enclosure is preferably a touch-and-close fastener. Most preferably, the male part of the touch-and-close fastener is applied to the edge of the enclosure and the female part to the pocket.

For applications such as a photographic soft-box, the planar face of the structure may be closed by one of a number of light-modifying screens one of which is chosen by the photographer to give the desired effect. Such a screen may be fitted to the soft-box by any suitable means. Most preferably, the edges of the screen and the corresponding edges of the enclosure are provided with cooperating male and female parts of a touch-and-close fastener.

In other application, the planar face of the soft-box may be open, eg where the internal surfaces of the enclosure are reflective and/or coloured.

The invention will now be described in greater detail, by way of illustration only, with reference to the accompanying drawings, in which
Figure 1 is a schematic perspective view of a photographic soft-box incorporating a collapsible structure according to the invention, in an expanded configuration;
Figure 2 is a side view of the soft-box of Figure 1;
Figure 3 is a schematic perspective view of the soft-box in a collapsed condition; and
Figure 4 shows stages in the assembly of the soft-box of Figures 1 to 3.

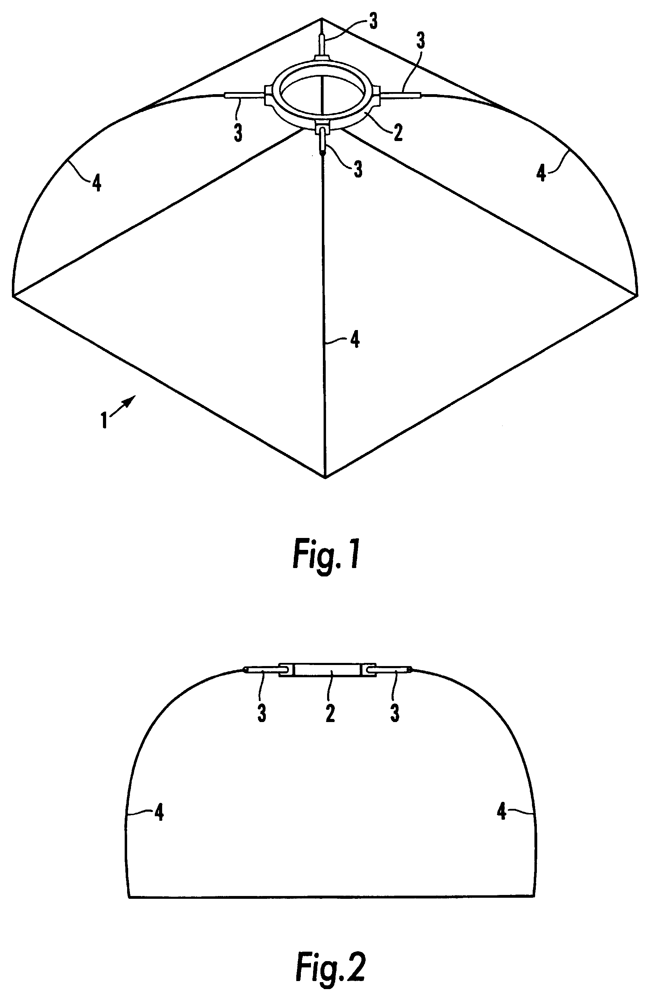

Referring first to Figure 1, a photographic soft-box is generally designated 1 and comprises a flexible skeleton on which is mounted a fabric enclosure. For clarity, the enclosure (which is generally conventional in form) is omitted from Figures 1 to 3, which thus show only the skeleton.

The skeleton includes a boss 2 which is adapted for mounting on a photographic studio lamp (not shown). The boss 2 has four rigid, radially extending, tubular arms 3, each of which receives one end of a resilient strut 4. The struts 4 are received within tubular sockets stitched to the internal surface of the enclosure, which is shaped to conform closely to the shape of the soft-box 1 in the expanded configuration, as shown in Figure 1.

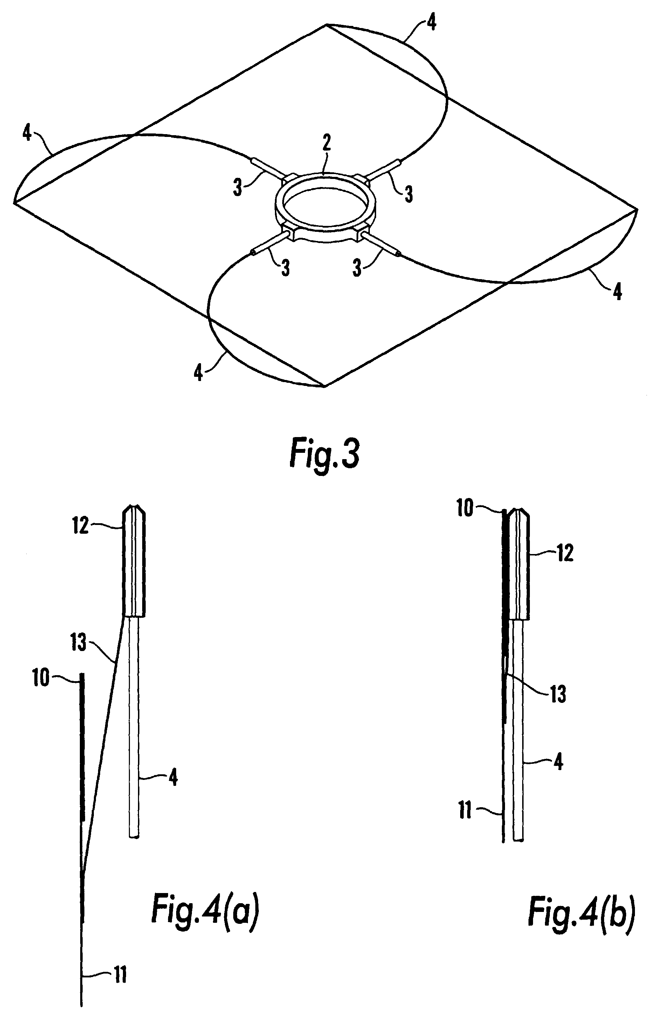

The ends of the struts 4 which are remote from the boss 2 are received within pockets at the comers of the enclosure. As shown in Figure 4, a male part 10 of a touch-and-close (hook-and-loop or VELCRO-type) fastener is stitched to the fabric 11 of the enclosure in the corner thereof A pocket 12 having on it external face a corresponding female part of the fastener is attached to the fabric 11 by an elasticated tape 13. To fit the enclosure to the skeleton, the pocket 12 is separated from the male fastener part 10 and the tape 13 stretched to allow the pocket 12 to be fitted over the end of a strut 4 (see Figure 4a). The fabric 11 is then tensioned, and if necessary the strut 4 is flexed, to allow the pocket 12 to be pressed against the male part 10 where it is retained by engagement of the female fastener part on the external surface of the pocket 12 (see Figure 4b).

In use, a light-modifying screen (not shown) is selected by the photographer to give the desired lighting effect and is mounted across the open square face of the soft-box 1. The screen may be, for instance, a light-diffusive screen or a coloured screen etc. Fastening of the screen to the soft-box 1 may be achieved by any suitable means. For instance, the edges of the screen and of the enclosure may be provided with cooperating parts of a touch-and-close fastener.

In use, the soft-box 1 has the expanded, pyramidal configuration shown in Figure 1 and Figure 2, in which the fabric of the enclosure is tensioned by the struts 4. For storage and transportation, however, the soft-box 1 may be collapsed to the configuration shown in Figure 3. This is achieved by grasping the boss 2 and twisting and depressing the same relative to the square face of the soft-box 1 until the boss 2 lies substantially in the plane of that face and the struts 4 have the configuration shown in Figure 3. The soft-box 1 may be collapsed either with a screen fitted or without.

When it is desired to use the soft-box 1 again, the boss 2 is grasped and given a sharp shake which causes the struts 4 to spring once again to the configuration of Figure 1.

## Claims

1. A collapsible structure having a generally pyramidal expanded configuration and a generally planar collapsed configuration, the structure having a generally planar face, the comers of which are connected by struts to a central boss positioned at the apex of the structure when the structure is in the expanded configuration, wherein the struts are resilient and flexible and of sufficient length to tension the planar face when the structure is in the expanded configuration and the structure can be collapsed by twisting and depressing the boss with respect to the planar face.

2. A structure as claimed in Claim 1, wherein the planar face of the structure is square, in which case there are four struts spaced at 90° intervals.

3. A structure as claimed in Claim 1 or Claim 2, which is a photographic soft-box.

4. A structure as claimed in Claim 3, wherein the planar face of the structure is a light-modifying screen and the boss is adapted for mounting on a suitable light source.

5. A structure as claimed in any preceding claim, the sides of the structure are closed by an enclosure which is shaped to conform to the shape of the structure in the expanded configuration.

6. A structure as claimed in Claim 5, wherein each corner of the enclosure is provided with a pocket into which the end of a strut is inserted.

7. A structure as claimed in Claim 6, wherein the pocket is releasably fastened to the enclosure and is connected thereto by an elastic linkage.

8. A structure as claimed in Claim 7, wherein the elastic linkage is an elasticated fabric tape or the like, and the releasable fastening between the pocket and the enclosure is a touch-and-close fastener.

9. A structure as claimed in Claim 8, wherein the male part of the touch-and-close fastener is applied to the edge of the enclosure and the female part to the pocket.

10. A structure as claimed in any preceding claim, wherein the planar face of the structure is closed by a light-modifying screen, the edges of the screen and the corresponding edges of the enclosure being provided with cooperating male and female parts of a touch-and-close fastener.
